# EUROPEAN PATENT APPLICATION

(11) **EP 2 857 937 A1**
(43) Date of publication of application: **08.04.2015**
(21) Application number: 12878110.1
(22) Date of filing: 02.08.2012
(51) Int. Cl.: G06F 3/023

(54) **INPUT PROCESSING METHOD AND DEVICE**

(30) Priority: 01.06.2012 CN 201210178938
(71) Applicant: ZTE Corporation, Guangdong Province 518057 (CN)
(72) Inventor: ZHU, Yan, Shenzhen Guangdong Province 518057 (CN); WANG, Jianxiu, Shenzhen Guangdong Province 518057 (CN); ZHONG, Sheng, Shenzhen Guangdong Province 518057 (CN); ZHANG, Zhenzhi, Shenzhen Guangdong Province 518057 (CN)
(74) Representative: Novagraaf Technologies
(86) International application number: PCT/CN2012/079557
(87) International publication number: WO 2013/177864

(57) **Abstract**

An input processing method and device are provided. The method includes: detecting that at least one input character is deleted; obtaining a group of candidate characters corresponding to a last input character in one or more input characters that are not deleted; and displaying the group of candidate characters. The solution solves the problem that a candidate word of a character cannot be reselected if the character is not re-input in the related art, thereby improving the input efficiency of characters and facilitating improvement of user experience.

## Description

### Technical Field

The present invention relates to the field of communications, and in particular to an input processing method and device.

### Background

Currently, products such as a computer and a mobile device usually have one or more built-in input methods, and these input methods usually support input based on candidate words. An input method which is fast and efficient and has good user experience is certainly more attractive and thus has significant effects of improving product image and increasing selling points.

However, the input method in the related art has a defect that after a character is input, when selecting a candidate word as further input, an incorrect candidate word may be input because of a false selection or other reasons, and if the candidate word selected to be input is deleted and the user wants to reselect a candidate word, the above-mentioned character needs to be re-input before the user can reselect a candidate word from the candidate words of the character, thereby reducing the input efficiency of characters and reducing user experience.

No effective solution has been presented so far for at least one of the above-mentioned problems in the related art.

### Summary

The embodiments of the present invention provide an input processing method and device so as to at least solve the problem that a candidate word of a character cannot be reselected if the character is not re-input in related art.

According to one embodiment of the present invention, an input processing method is provided, which includes: detecting that at least one input character is deleted; acquiring a group of candidate characters corresponding to a last input character in one or more input characters that are not deleted; and displaying the group of candidate characters.

In the described embodiment, before the detecting that at least one input character is deleted, the above-mentioned input processing method further includes: according to a preset corresponding relationship between a storage location of an input character and a storage location of a group of candidate characters corresponding to the input character, storing the input character and the group of candidate characters.

In the described embodiment, the acquiring the group of candidate characters corresponding to the last input character in the one or more input characters that are not deleted includes: detecting a storage location of the above-mentioned last input character; and acquiring the group of candidate characters corresponding to the last input character according to the storage location of the last input character.

In the described embodiment, the detecting the storage location of the last input character includes: detecting a storage location of a first input character in the at least one deleted input character; and detecting the storage location of the above-mentioned last input character according to the storage location of the first input character.

In the described embodiment, before the detecting that at least one input character is deleted, the above-mentioned input processing method further includes: conducting code conversion on an input character to acquire a group of candidate characters matching the input character.

According to another embodiment of the present invention, an input processing device is provided, which includes: a detection component, configured to detect that at least one input character is deleted; an acquisition component, configured to acquire a group of candidate characters corresponding to a last input character in one or more input characters that are not deleted; and a display component, configured to display the above-mentioned group of candidate characters.

In the described embodiment, the above-mentioned input processing device further includes: a storage component, configured to, according to a preset corresponding relationship between a storage location of an input character and a storage location of a group of candidate characters corresponding to the input character, store the input character and the group of candidate characters.

In the described embodiment, the acquisition component includes: a detection unit, configured to detect a storage location of the above-mentioned last input character; and an acquisition unit, configured to acquire the group of candidate characters corresponding to the last input character according to the storage location of the last input character.

In the described embodiment, the detection unit includes: a first detection subunit, configured to detect a storage location of a first input character in the at least one deleted input character; and a second detection subunit, configured to detect the storage location of the above-mentioned last input character according to the storage location of the above-mentioned first input character.

In the described embodiment, the above-mentioned input processing device further includes: a code conversion component, configured to conduct code conversion on an input character to acquire a group of candidate characters matching the input character.

In the embodiments of the present invention, upon detecting that at least one input character is deleted, a group of candidate characters corresponding to and matching a last input character in one or more input characters that are not deleted can be acquired, and the group of candidate characters is displayed for a user to perform further selection. For example, under the condition where there is a falsely selected candidate word, a user does not need to re-input the above-mentioned last input character and can directly reselect a required candidate character according to the displayed group of candidate characters, thereby improving the input efficiency of characters and facilitating improvement of user experience.

### Brief Description of the Drawings

Drawings, provided for further understanding of the present invention and forming a part of the specification, are used to explain the present invention together with embodiments of the present invention rather than to limit the present invention. In the drawings:
Fig. 1 shows a flowchart of an input processing method according to an embodiment of the present invention;
Fig. 2 shows a structure diagram of an input processing device according to an embodiment of the present invention;
Fig. 3 shows a structure diagram of another input processing device according to an embodiment of the present invention;
Fig. 4 shows a structure diagram of an acquisition component according to an embodiment of the present invention.
Fig. 5 shows a structure diagram of a detection unit according to an embodiment of the present invention;
Fig. 6 shows a structure diagram of another input processing device according to an embodiment of the present invention;
Fig. 7 shows a flowchart of another input processing method according to an embodiment of the present invention;
Fig. 8 shows a display diagram of candidate words according to an embodiment of the present invention; and
Fig. 9 shows a display diagram when a candidate word is input according to an embodiment of the present invention.

### Detailed Description of the Embodiments

The present invention is described below with reference to the accompanying drawings and embodiments in detail. Note that, the embodiments of the present application and the features of the embodiments can be combined with each other if there is no conflict.

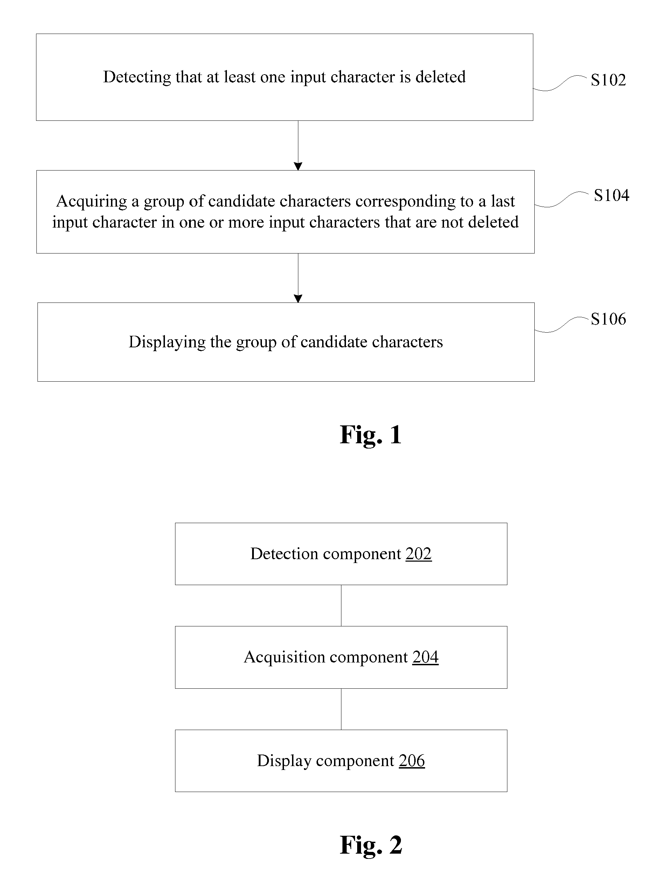

An embodiment of the present embodiment provides an input processing method. As shown in Fig. 1, the input processing method includes steps S102-S106.

Step S102: it is detected that at least one input character is deleted.

Step S104: a group of candidate characters corresponding to a last input character in one or more input characters that are not deleted is acquired.

Step S106: the group of candidate characters is displayed.

By means of the above-mentioned steps, upon detecting that at least one input character is deleted, a group of candidate characters corresponding to and matching a last input character in one or more input characters that are not deleted can be acquired, and the group of candidate characters is displayed for a user to perform further selection. For example, under the condition where there is a falsely selected candidate word, it is achieved that a user may not re-input the above-mentioned last input character and directly reselects a required candidate character according to the displayed group of candidate characters, thereby improving the input efficiency of characters and facilitating improvement of user experience.

In an example embodiment, the input processing method provided in the above-mentioned embodiment can well achieve that under the condition of not re-inputting a character, a candidate word of the input character can be directly reselected. Certainly, the usage of the above-mentioned input processing method is not limited to the scenario of falsely selecting a candidate word of a certain input character. There may be a plurality of the above-mentioned deleted input characters, for example, when a user inputs a character, it may be necessary to delete a plurality of input characters for changing the expressed word meanings or for other reasons, and a group of candidate characters corresponding to and matching the last input character in one or more input characters that are not deleted may be displayed at the moment for the user to perform further selection so as to improve the input efficiency of characters.

In order to accurately, rapidly and effectively acquire a group of candidate characters corresponding to the last input character in one or more input characters that are not deleted, in the present example embodiment, before detecting that at least one input character is deleted, according to a preset corresponding relationship between a storage location of an input character and a storage location of a group of candidate characters corresponding to the input character, the input character and the group of candidate characters are stored.

In the above-mentioned example embodiment, after acquiring a group of candidate characters corresponding to an input character from a lexicon database according to the input character, the input character and the group of candidate characters are stored. In order to accurately, rapidly and effectively acquire a group of candidate characters corresponding to the above-mentioned input character again, the input character and the group of candidate characters are stored according to a preset corresponding relationship between storage locations so as to accurately, rapidly and effectively acquire a group of candidate characters again without any need for the user to re-input the above-mentioned input character.

In order to effectively acquire a group of candidate characters corresponding to the last input character in one or more input characters that are not deleted again, the present example embodiment provides a method for acquiring a group of candidate characters corresponding to the last input character in one or more input characters that are not deleted, e.g., detecting a storage location of the above-mentioned last input character, and acquiring the group of candidate characters corresponding to the last input character according to the storage location of the last input character.

In the above-mentioned example embodiment, upon detecting that at least one input character is deleted, a storage location of the last input character in one or more input characters that are not deleted is detected and acquired, and then a group of candidate characters matching the last input character is acquired based on a preset corresponding relationship between a storage location of the input character and a storage location of the group of candidate characters according to the detected storage location of the above-mentioned last input character, thereby improving the accuracy and validity of acquiring a group of candidate characters.

In order to improve the flexibility of the present embodiment, the present example embodiment provides a method for detecting a storage location of the last input character in one or more input characters that are not deleted, e.g., detecting a storage location of a first input character in the at least one deleted input character, and according to the storage location of the above-mentioned first input character, detecting the storage location of the above-mentioned last input character.

In the above-mentioned example embodiment, upon detecting that at least one input character is deleted, a storage location of the last input character in one or more input characters that are not deleted is firstly detected and acquired, and then based on a preset corresponding relationship between a storage location of an input character and a storage location of a group of candidate characters, the storage location of the above-mentioned last input character can be acquired according to the storage location of the above-mentioned first input character and then the group of candidate characters matching the input character is acquired according to the storage location of the above-mentioned last input character, thereby improving the flexibility of the present embodiment.

In order to realize acquiring a group of candidate characters matching an input character, in the present example embodiment, before detecting that at least one input character is deleted, code conversion is conducted on the input character to acquire a group of candidate characters matching the input character.

In the above-mentioned example embodiment, upon detecting that there is an input character, code conversion is conducted on the input character to acquire a group of candidate characters matching the input character from a lexicon database and the characters are displayed for a user to perform further selection so as to improve the input efficiency of characters, and it is convenient that the group of candidate characters can be easily re-acquired when a candidate character is falsely selected subsequently.

In an example embodiment, the above-mentioned input character and the group of candidate characters can be input characters of any kind, for example, characters of a plurality of languages such as Chinese and English.

The present embodiment provides an input processing device. As shown in Fig. 2, the input processing device includes: a detection component **202,** configured to detect that at least one input character is deleted; an acquisition component **204,** coupled to the detection component **202** and configured to acquire a group of candidate characters corresponding to a last input character in one or more input characters that are not deleted; and a display component **206,** coupled to the acquisition component **204** and configured to display the group of candidate characters.

In the above-mentioned embodiment, the detection component **202** detects that at least one input character is deleted, the acquisition component **204** can acquire a group of candidate characters corresponding to and matching a last input character in one or more input characters that are not deleted, and the display component **206** displays the group of candidate characters for a user to perform further selection, for example, under the condition where there is a falsely selected candidate word, it is achieved that a user may not re-input the above-mentioned input character and directly reselects a required candidate character according to the displayed group of candidate characters, thereby improving the input efficiency of characters and facilitating improvement of user experience.

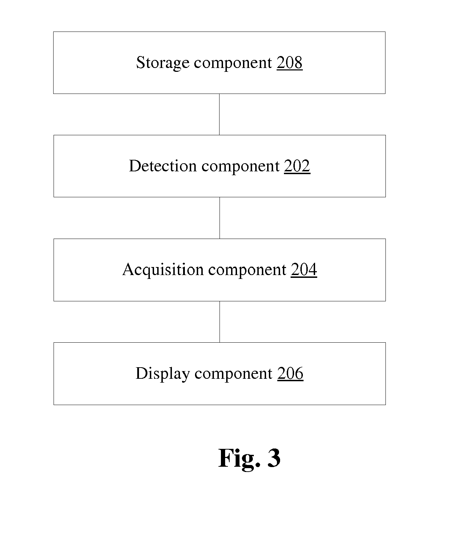

In order to accurately, rapidly and effectively acquire a group of candidate characters corresponding to an input character, in the present example embodiment, as shown in Fig. 3, the above-mentioned input processing device further includes: a storage component **208,** configured to, according to a preset corresponding relationship between a storage location of an input character and a storage location of a group of candidate characters corresponding to the input character, store the input character and the group of candidate characters.

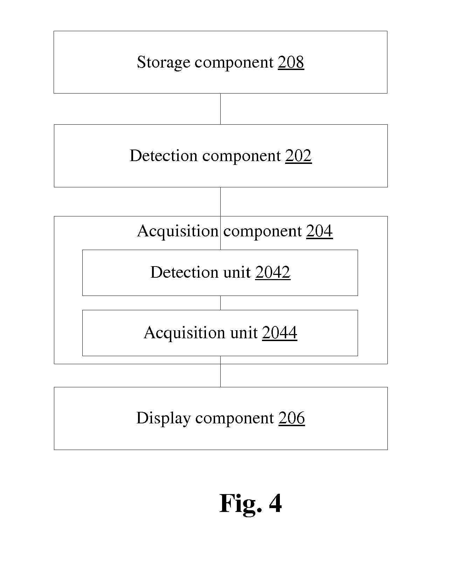

In order to effectively acquire a group of candidate characters corresponding to the input character again, in the present example embodiment, as shown in Fig. 4, the acquisition component **204** includes: a detection unit **2042,** configured to detect a storage location of the above-mentioned last input character; and an acquisition unit **2044,** coupled to the detection unit **2042** and configured to, acquire the group of candidate characters corresponding to the last input character according to the storage location of the last input character.

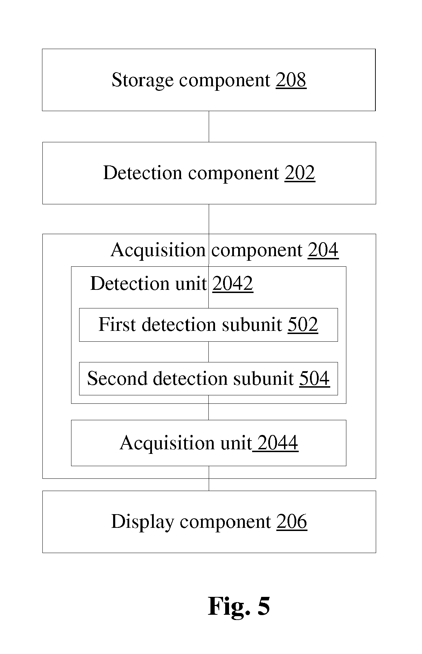

In order to improve the flexibility of the present embodiment, in the present example embodiment, as shown in Fig. 5, the detection unit **2042** includes: a first detection subunit **502,** configured to detect a storage location of a first input character in the at least one deleted input character; and a second detection subunit **504,** coupled to the first detection subunit **502** and configured to, according to the storage location of the above-mentioned first input character, detect the storage location of the above-mentioned last input character.

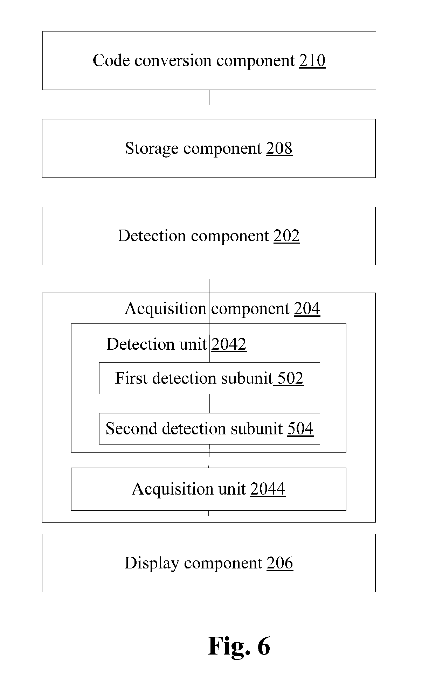

In order to realize acquiring a group of candidate characters matching an input character, in the present example embodiment, as shown in Fig. 6, the above-mentioned input processing device further includes: a code conversion component **210,** configured to conduct code conversion on the input character to acquire a group of candidate characters matching the input character.

Another example embodiment is illustrated hereinafter in conjunction with the drawings.

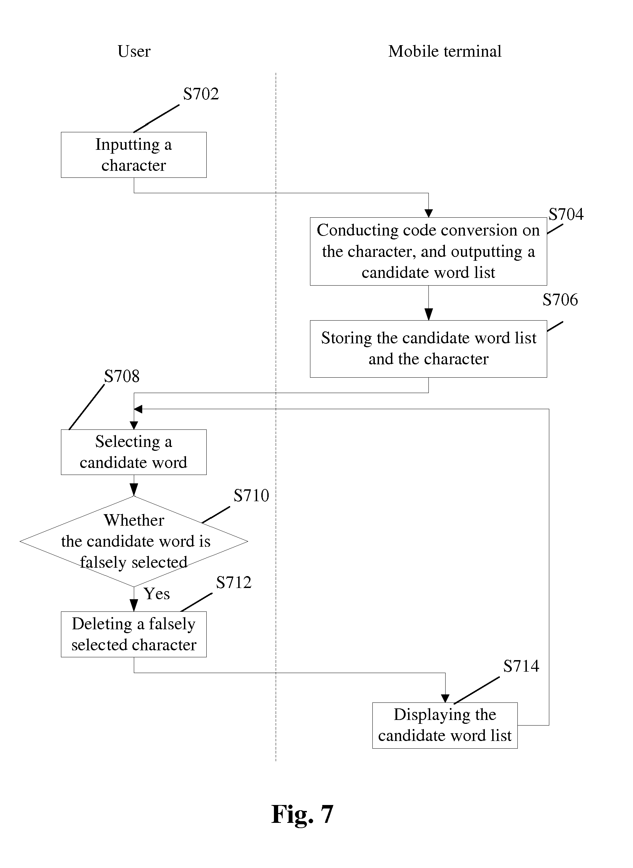

In the present embodiment, an application scenario of falsely selecting a candidate word of a certain input character is taken as an example to describe the above-mentioned input processing method in detail. Fig. 7 shows a flowchart of another input processing method according to an embodiment of the present invention. As shown in Fig. 7, the input processing method includes steps S702-S714.

Step S702: a character is input. A user inputs a character via an input method keyboard, and the character may be input as a character of any language such as English or Chinese.

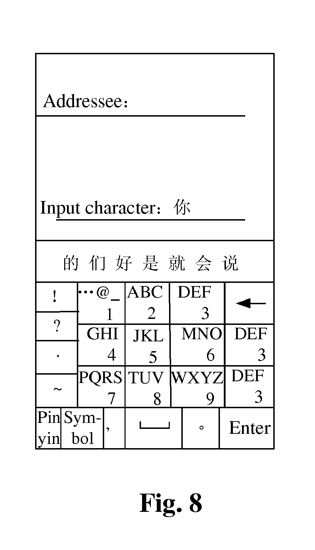

Step S704: code conversion is conducted on the above-mentioned input character to acquire a candidate word list (equivalent to a group of candidate characters) matching this character item, and the candidate word list is output for a user to perform further selection. As shown in Fig. 8, the user uses an input method in a certain application (applications such as a short message or a mail), and after a character (e.g., " 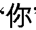 " ("you")) is input, a mobile terminal may output a candidate word list.

Step S706: the candidate word list and the above-mentioned character input in an input box are stored. In this step, in order to accurately, rapidly and effectively acquire a candidate word list corresponding to an input character, according to a preset corresponding relationship between a storage location storing an input character and a storage location storing a candidate word list, the input character and the candidate word list are stored.

Step S708: a candidate word is selected. The user selects the character from the provided candidate word list.

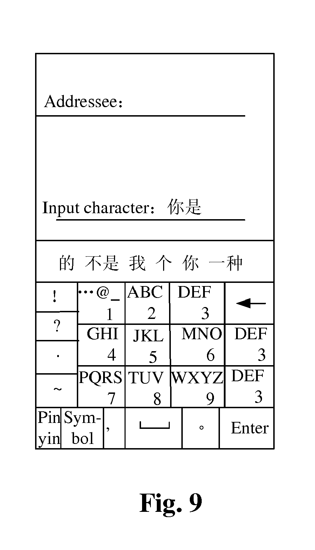

Step S710: it is judged whether this candidate word is falsely selected. If the candidate word is not falsely selected, the user may continuously input one or more characters or select a character from the subsequent candidate word list until the input is completed. If the candidate word is falsely selected, as shown in Fig. 9, the user may want to select the candidate character " 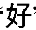 " ("Hello"), but selects the candidate character " 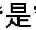 " ("are") because of an unintended operation, then step S712 is further executed.

Step S712: a falsely selected character (equivalent to the first input character in the above-mentioned one or more deleted input characters) is deleted. After falsely selecting a character, the user deletes the falsely selected character.

Step S714: the above-mentioned candidate word list (the candidate word list as shown in Fig. 8) is acquired and re-displayed. In this step, upon detecting that the falsely selected character is deleted, a storage location of the above-mentioned input character (equivalent to the last input character in the above-mentioned one or more input characters that are not deleted) is detected and acquired, and then according to the detected storage location of the above-mentioned input character, the candidate word list is acquired for the user to perform reselection.

The above-mentioned embodiments achieve at least one of the following technical effects: upon detecting that at least one input character is deleted, a group of candidate characters corresponding to and matching a last input character in one or more input characters that are not deleted can be acquired, and the group of candidate characters is displayed for a user to perform further selection, for example, under the condition where there is a falsely selected candidate word, it is achieved that a user may not re-input the above-mentioned last input character and directly reselects a required candidate character according to the displayed group of candidate characters, thereby improving the input efficiency of characters and facilitating improvement of user experience. Furthermore, a storage method for storing an input character and a group of candidate characters and a method for re-acquiring a group of candidate characters without needing the user to re-input the above-mentioned input character are provided so that a group of candidate characters corresponding to an input character can be accurately, rapidly and effectively acquired for a user to perform further selection.

Obviously, those skilled in the art should know that each of the mentioned components or steps of the present invention can be realized by universal computing devices; the components or steps can be focused on single computing device, or distributed on the network formed by multiple computing devices; selectively, they can be realized by the program codes which can be executed by the computing device; thereby, the components or steps can be stored in the storage device and executed by the computing device; and under some circumstances, the shown or described steps can be executed in different orders, or can be independently manufactured as each integrated circuit component, or multiple components or steps thereof can be manufactured to be single integrated circuit component, thus to be realized. In this way, the present invention is not restricted to any particular hardware and software combination.

The descriptions above are only the preferable embodiment of the present invention, which are not used to restrict the present invention, for those skilled in the art, the present invention may have various changes and variations. Any amendments, equivalent substitutions, improvements, etc. within the principle of the present invention are all included in the scope of the protection as defined by the appended claims of the present invention.

## Claims

1. An input processing method, **characterized by** comprising:
detecting that at least one input character is deleted;
acquiring a group of candidate characters corresponding to a last input character in one or more input characters that are not deleted; and
displaying the group of candidate characters.

2. The method according to claim 1, **characterized in that** before the detecting that at least one input character is deleted, the method further comprises:
according to a preset corresponding relationship between a storage location of an input character and a storage location of a group of candidate characters corresponding to the input character, storing the input character and the group of candidate characters.

3. The method according to claim 2, **characterized in that** the acquiring the group of candidate characters corresponding to the last input character in the one or more input characters that are not deleted comprises:
detecting a storage location of the last input character; and
acquiring the group of candidate characters corresponding to the last input character according to the storage location of the last input character.

4. The method according to claim 3, **characterized in that** the detecting the storage location of the last input character comprises:
detecting a storage location of a first input character in the at least one deleted input character; and
detecting the storage location of the last input character according to the storage location of the first input character.

5. The method according to any one of claims 1 to 4, **characterized in that** before the detecting that at least one input character is deleted, the method further comprises:
conducting code conversion on an input character to acquire a group of candidate characters matching the input character.

6. An input processing device, **characterized by** comprising:
a detection component, configured to detect that at least one input character is deleted;
an acquisition component, configured to acquire a group of candidate characters corresponding to a last input character in one or more input characters that are not deleted; and
a display component, configured to display the group of candidate characters.

7. The device according to claim 6, **characterized by** further comprising:
a storage component, configured to, according to a preset corresponding relationship between a storage location of an input character and a storage location of a group of candidate characters corresponding to the input character, store the input character and the group of candidate characters.

8. The device according to claim 7, **characterized in that** the acquisition component comprises:
a detection unit, configured to detect a storage location of the last input character; and
an acquisition unit, configured to acquire the group of candidate characters corresponding to the last input character according to the storage location of the last input character.

9. The device according to claim 8, **characterized in that** the detection unit comprises:
a first detection subunit, configured to detect a storage location of a first input character in the at least one deleted input character; and
a second detection subunit, configured to detect the storage location of the last input character according to the storage location of the first input character.

10. The device according to any one of claims 6 to 9, **characterized by** further comprising:
a code conversion component, configured to conduct code conversion on an input character to acquire a group of candidate characters matching the input character.
